# EUROPÄISCHE PATENTSCHRIFT

(11) **EP 0 680 183 B1**
(45) Veröffentlichungstag und Bekanntmachung des Hinweises auf die Patenterteilung: **18.12.2002**
(21) Anmeldenummer: 95106465.8
(22) Anmeldetag: 21.04.1995
(51) Int. Cl.: H04L 25/03, G11B 20/10

(54) **Verfahren zur Einstellung der Parameter eines Entzerrers**
Method for setting the parameters of an equaliser
Procédé d'établissement des paramètres d'un égaliseur

(30) Priorität: 30.04.1994 DE 4415298
(43) Veröffentlichungstag der Anmeldung: 02.11.1995
(73) Patentinhaber: DEUTSCHE THOMSON-BRANDT GMBH, 78048 Villingen-Schwenningen (DE)
(72) Erfinder: Mager, Klaus, D-78073 Bad Dürrheim (DE); Wursthorn, Edgar, D-78073 Bad Dürrheim (DE)

(56) Entgegenhaltungen:
- EP-A- 0 332 079
- US-A- 4 153 020
- US-A- 4 694 498
- IBM TECHNICAL DISCLOSURE BULLETIN, Bd. 20, Nr. 2, Juli 1977, Seiten 518-520, XP002025179 LUHRS ET AL.: "Adaptive equalization for digital recorder readback circuits"

## Beschreibung

Die Erfindung betrifft ein Verfahren zur Einstellung der Parameter eines Entzerrers.

Entzerrer werden eingesetzt, um verzerrte Signale zu entzerren. Um eine optimale Entzerrung eines verzerrten Signals zu erzielen, sind die Parameter des Entzerrers optimal einzustellen.

Aus der US-A-4 694 498 ist ein System zur automatischen Schallfeldkorrektur bekannt, bei dem ein grafischer Entzerrer zur Anpassung des Audiosignals an die Raumakustik vorgesehen ist. Ein Abgleich des Entzerrers findet so statt, daß ein Testaudiosignal nach Passierung des Entzerrers gleichgerichtet und danach integriert wird. Das so gewonnene Integrationssignal wird A/D-gewandelt und einer Steuerschaltung zugeführt, die dieses für die Berechnung neuer Einstellwerte für den Entzerrer heranzieht.

Es ist Aufgabe der Erfindung, ein verbessertes Verfahren zur automatischen Einstellung der Parameter eines Entzerrers anzugeben.

Die Erfindung löst diese Aufgabe durch das in Anspruch 1 angegebene Verfahren.

Es zeigen:

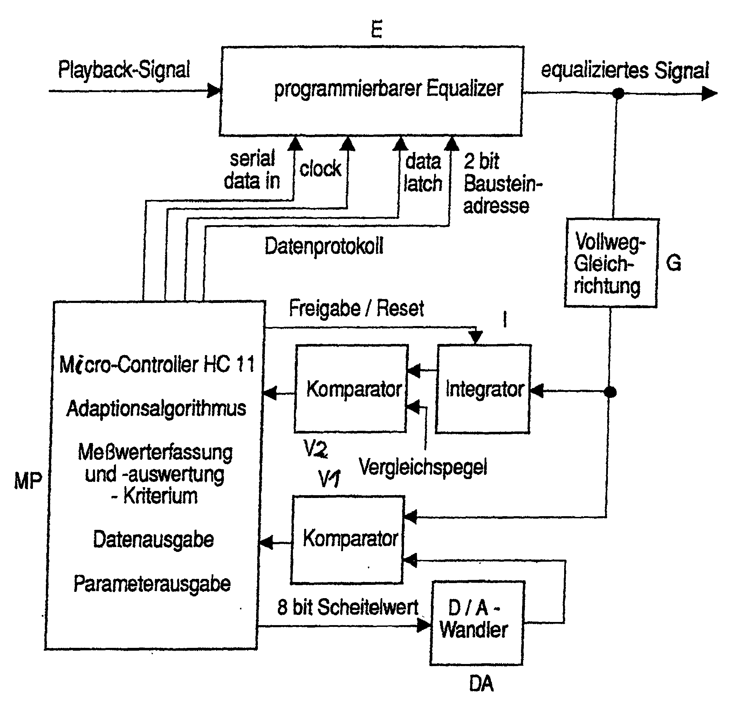

Figur 1 ein Ausführungsbeispiel der Erfindung.

Anhand des in Figur 1 gezeigten Ausführungsbeispieles wird die Erfindung zunächst beschrieben und anschließend erläutert.

Das zu entzerrende Signal wird dem Eingang eines Entzerrers E zugeführt, dessen Ausgang mit dem Eingang eines Vollweggleichrichters G verbunden ist. Der Ausgang des Vollweggleichrichters G ist mit dem Eingang eines Integrators I und mit dem Eingang eines ersten Vergleichers V1 verbunden. Der Ausgang des Integrators I ist mit dem ersten Eingang eines zweiten Vergleichers V2 verbunden, an dessen zweitem Eingang eine Referenzgröße liegt. Der Ausgang des ersten Vergleichers ist mit dem ersten Eingang eines Mikroprozessors MP verbunden, dessen erster Ausgang mit dem Eingang eines Digital-Analog-Wandlers verbunden ist. Der Ausgang des Digital-Analog-Wandlers DA ist mit dem zweiten Eingang des ersten Vergleichers verbunden. Die Parameterausgänge des Mikroprozessors MP sind mit den Parametereingängen des Entzerrers E verbunden.

Zur Einstellung der Parameter des Entzerrers E wird das Ausgangssignal des Entzerrers E zunächst auf die Amplitude normiert und anschließend im Vollweggleichrichter G gleichgerichtet. Der Integrator I integriert das gleichgerichtete Ausgangssignal des Vollweggleichrichters G. In der erfindungsgemäßen Lösung ist vorgesehen, daß der Pegel des integrierten Signals festgehalten wird und daß die Integrationszeit gemessen wird. Der Mikroprozessor MP stellt die Parameter für den Entzerrer E mittels eines Algorithmus so ein, daß bei festgelegtem Maximalpegel des integierten Signals am Ausgang des Integrators I die Integrationszeit minimal wird. Wenn bei festgelegtem Maximalpegel des Signals am Ausgang des Integrators I die Integrationszeit minimal wird, sind die optimalen Parameter für den Entzerrer E gefunden.

Während des Abgleichvorgangs werden jeweils zwei Parametereinstellungen miteinander verglichen. Die bessere von beiden wird beibehalten und mit der nächsten Parametereinstellung verglichen. Durch sukzessive Approximation wird dann die optimale Einstellung der Parameter erzielt.

## Patentansprüche

1. Verfahren zur Einstellung der Parameter eines Entzerrers (E) bei dem das Ausgangssignal des Entzerrers (E) in einem Vollweggleichrichter (G) gleichgerichtet wird, dessen Ausgangssignal in einem Integrator (I) integriert wird, **dadurch gekennzeichnet, daß** die Parameter des Entzerrers (E) so eingestellt werden, daß bei einem festgelegtem Maximalpegel des integrierten Signals die Integrationszeit minimal wird, wobei während des Abgleichvorgangs jeweils zwei Parametereinstellungen miteinander verglichen werden und die bessere von beiden beibehalten wird und mit der nächsten Parametereinstellung während des Abgleichvorgangs verglichen wird, um per sukzessiver Approximation die optimierten Parameter zu finden.

2. Verfahren nach Anspruch 1, **dadurch gekennzeichnet, daß** in einem Mikroprozessor (MP) mittels eines Algorithmus die Parameter für den Entzerrer (E) berechnet werden.

3. Vorrichtung zur Einstellung der Parameter eines Entzerrers (E) bei der der Ausgang des Entzerrers (E) mit dem Eingang eines Vollweggleichrichters (G) verbunden ist, dessen Ausgang mit dem Eingang eines Integrators (I) verbunden ist, **dadurch gekennzeichnet, daß** der Ausgang des Vollweggleichrichters (G) weiterhin mit dem ersten Eingang eines ersten Vergleichers (V1) verbunden ist, daß der Ausgang des Integrators (I) mit dem ersten Eingang eines zweiten Vergleichers (V2) verbunden ist, an dessen zweitem Eingang ein Referenzwert liegt, daß der Ausgang des ersten Vergleichers (V1) mit dem ersten Eingang eines Mikroprozessors (MP) verbunden ist, daß ein erster Ausgang des Mikroprozessors (MP) mit dem Eingang eines Digital/Analog-Wandlers (D/A) verbunden ist, dessen Ausgang mit dem zweiten Eingang des ersten Vergleichers (V1) verbunden ist, daß der Ausgang des zweiten Vergleichers (V2) mit einem zweiten Eingang des Mikroprozessors (MP) verbunden ist, daß die Parameterausgänge des Mikroprozessors (MP) mit den Parametereingängen des Entzerrers (E) verbunden sind, wobei der Mikroprozessor (MP) ein Programm für einen Abgleichvorgang für die Parameter des Entzerrers enthält, mit Mitteln zur Messung der Integrationszeit des Integrators (I) bei festgelegtem Maximalwert des integrierten Signals, jeweils pro Parametereinstellung, mit Mitteln zur Veränderung der Parametereinstellungen, sowie zur wiederholten Messung der zugehörigen Integrationszeit und mit Vergleichsmitteln zum Vergleich der vorherigen Integrationszeit und der Integrationszeit nach Veränderung der Parametereinstellungen und mit Mitteln zur Beibehaltung der Parametereinstellungen die zu der kürzeren Integrationszeit zugehörig sind für den nächsten Approximationsschritt, um so die optimale Einstellung der Parameter des Entzerrers (E) zu erzielen.

## Claims

1. Method for setting the parameters of an equalizer (E), wherein the output signal of the equalizer (E) is rectified in a full-wave rectifier (G), the output signal of which is integrated in an integrator (I),
**characterized in that** the parameters of the equalizer (E) are set in such a manner that the integration time becomes a minimum at a fixed maximum level of the integrated signal, wherein during the calibration process two parameter settings, respectively, are compared with each other and the better one of both is maintained and is compared with the next parameter setting during the equalizing prozess in order to find the optimized parameters by a gradual approximation.

2. Method according to claim 1,
**characterized in that** the parameters for the equalizer (E) are calculated by means of an algorithm in a microprocessor (MP).

3. Arrangement for setting the parameters of an equalizer (E), wherein the output of the equalizer (E) is connected to the input of a full-wave rectifier (G) the output of which is connected to the input of an integrator,
**characterized in that**, the output of the full-wave rectifier (G) is also connected to the first input of a first comparator (V1), that the output of the integrator is connected to the first input of a second comparator (V2), at the second input of which a reference value is present, that the output of the first comparator (V1) is connected to the first input of a microprosessor (MP), that a first output of the microprocessor (MP) is connected to the input of a digital/analog-converter (D/A), the output of which is connected to the second input of the first comparator (V1), that the output of the second comparator (V2) is connected to a second input of the microprocessor (MP) and that the parameter outputs of the microprocessor (MP) are connected to the parameter inputs of the equalizer (G), wherein the microprocessor (MP) includes a program for a calibration process for the parameters of the equalizer, with means for measuring the integration time of the integrator (I) at a fix maximal value of the integrated signal per parameter setting, respectivley, with means for varying the parameter settings and for a repeated measuring the associated integration time and with comparing means for comparing the preceding integration time and the integration time after variation of the parameter settings and with means for maintaining the parameter settings belonging to the shorter integration time for the next approximation step, in order to achieve in this way the optimal setting of the parameters of the equalizer (E).

## Revendications

1. Procédé d'établissement des paramètres d'un égaliseur (E) dans lequel le signal de sortie de l'égaliseur (E) est redressé dans un redresseur double alternance (R), dont le signal de sortie est intégré dans un intégrateur (I), **caractérisé en ce que** les paramètres de l'égaliseur (E) sont définis de sorte qu'avec un niveau maximal prédéterminé du signal intégré, le temps d'intégration soit réduit au minimum, et, lors du processus de réglage, deux définitions de paramètres sont comparées l'une à l'autre à chaque fois et la meilleure des deux est conservée et comparée à la définition de paramètres suivante lors du processus de réglage, pour trouver les paramètres optimaux par approximations successives.

2. Procédé conforme à la revendication 1, **caractérisé en ce que,** dans un microprocesseur (MP), les paramètres de l'égaliseur (E) sont calculés au moyen d'un algorithme.

3. Dispositif d'établissement des paramètres d'un égaliseur (E) dans lequel la sortie de l'égaliseur (E) est reliée à l'entrée d'un redresseur double alternance (R), dont la sortie est reliée à l'entrée d'un intégrateur (I), **caractérisé en ce que** la sortie du redresseur double alternance (R) est en outre reliée à la première entrée d'un premier comparateur (C1), **en ce que** la sortie de l'intégrateur (I) est reliée à la première entrée d'un deuxième comparateur (C2), dont la deuxième entrée présente une valeur de référence, **en ce que** la sortie du premier comparateur (C1) est reliée à la première entrée d'un microprocesseur (MP), **en ce qu'**une première sortie du microprocesseur (MP) est reliée à l'entrée d'un convertisseur numérique-analogique (NA), dont la sortie est reliée à la deuxième entrée du premier comparateur (C1), **en ce que** la sortie du deuxième comparateur (C2) est reliée à une deuxième entrée du microprocesseur (MP), **en ce que** les sorties de paramètres du microprocesseur (MP) sont reliées aux entrées de paramètres de l'égaliseur (E), et le microprocesseur (MP) contient un programme pour un processus de réglage pour les paramètres de l'égaliseur, avec des moyens de mesure du temps d'intégration de l'intégrateur (I) pour une valeur maximale prédéterminée du signal intégré, pour chaque définition de paramètres, avec des moyens de modification des définitions de paramètres et avec des moyens de mesure répétée du temps d'intégration associé, et avec des moyens de comparaison pour comparer le temps d'intégration préalable et le temps d'intégration après modification des définitions de paramètres, et avec des moyens de conservation des définitions de paramètres associées au temps d'intégration le plus court pour l'étape d'approximation suivante, pour obtenir un établissement optimal des paramètres de l'égaliseur (E).
